# EUROPEAN PATENT APPLICATION

(11) **EP 2 602 964 A1**
(43) Date of publication of application: **12.06.2013**
(21) Application number: 11814023.5
(22) Date of filing: 16.02.2011
(51) Int. Cl.: H04L 29/02

(54) **METHOD, DEVICE AND EQUIPMENT FOR SERVICE MANAGEMENT**

(30) Priority: 06.08.2010 CN 201010248052
(71) Applicant: ZTE Corporation, Shenzhen, Guangdong 518057 (CN)
(72) Inventor: XIANG, Hong, Shenzhen Guangdong 518057 (CN); LI, Yi, Shenzhen Guangdong 518057 (CN); XIE, Baoyou, Shenzhen Guangdong 518057 (CN)
(74) Representative: Müller-Boré & Partner Patentanwälte
(86) International application number: PCT/CN2011/071036
(87) International publication number: WO 2012/016439

(57) **Abstract**

The present invention discloses a method and an apparatus for service management and a device, wherein the method comprises: an operation system schedules all the Central Processing Units (CPUs) of the device, and groups all or parts of the scheduled CPUs to obtain multiple CPU sets; the operation system binds applications to the CPU sets according to the real-time requirement of data; and the operation system controls the CPU sets bound with the applications to process their respective bound applications. The present invention implements the application allocation for multiple CPU sets based on the real-time requirement of data by a single operating system to implement the multi-core heterogeneous running mode for the single operating system, thereby effectively reducing the processing complexity (such as, the complexity of system startup, system booting, version management, system debugging and the like), avoiding the communication and location between the operating systems, and reducing the complexity of application development.

## Description

### Field of the Invention

The present invention relates to the field of communications, in particular to a method and an apparatus for service management and a device.

### Background of the Invention

In the application of communication devices, different service data stream has different priority. For example, data in a data stream can be divided into media plane data, i.e., data corresponding to media plane application, and control plane data, i.e., data corresponding to control plane application. For the media plane data, it is high in real-time requirement, but simple in processing flow and regular in processing logic. For example, the processing of the media plane data is mainly to analyze a data packet and then forward the data packet from one socket to another socket; while for the control plane data, it is low in real-time requirement, but complex in processing logic.

For the processing difference of different data with different priority, a multi-core heterogeneous running mode is mainly used in a device currently to run different application process on the multi-core system. In such a running mode, multiple operating systems can be run on one physical device and allocated with different physical cores and physical memory resources. Moreover, the media plane data is run on one operating system, while the control plane data is run on another operating system, accordingly, the process for debugging and location between different operating systems is more complex, and the development and debugging of application is inconvenient due to different interfaces between different operating systems. Furthermore, the process for startup and booting of multiple operating systems is more complex with a long startup delay, and the version management and startup flow control are more complex than that of the single operating system.

At present, there is no effective solution for the problems of high processing complexity and inconvenient communication between the operating systems caused by the operation using multiple operating systems in the multi-core heterogeneous running mode in the related arts.

### Summary of the Invention

For the problems of high processing complexity and inconvenient communication between the operating systems caused by the operation using multiple operating systems in the multi-core heterogeneous running mode, the present invention proposes a method and an apparatus for service management and a device, capable of implementing the multi-core heterogeneous running mode by a single operating system, thereby effectively reducing the processing complexity and avoiding the communication and location between the operating systems.

To solve the technical problem above, the technical solution of the disclosure of the present invention is realized as follows.

A method for service management, includes: scheduling all Central Processing Units (CPUs) of a device and grouping all or parts of the scheduled CPUs to obtain multiple CPU sets by an operation system; binding applications to the CPU sets according to real-time requirement of data by the operation system; and controlling the CPU sets bound with the applications to process their respective bound applications by the operation system.

The operation of binding services to the CPU sets according to the real-time requirement of service comprises: real-time service parameters of the applications bound to the same CPU set are within a preset range.

The method further comprises: when a less value of real-time service parameter means higher real-time requirement of the data corresponding to the application, binding a soft interrupt of the application with the real-time service parameter less than or equal to a predetermined value to the CPU set corresponding to the application with the real-time service parameter greater than the predetermined value by the operating system; or, when a greater value of real-time service parameter means higher real-time requirement of the data corresponding to the application, binding a soft interrupt of the application with the real-time service parameter greater than or equal to the predetermined value to the CPU set corresponding to the application with the real-time service parameter less than the predetermined value by the operating system.

The method further comprises: when a less value of real-time service parameter means higher real-time requirement of the data corresponding to the application, adjusting, by the operating system, a processing period of a local clock for each CPU in the CPU set which is bound with the application with the real-time service parameter less than or equal to a predetermined value, to make the adjusted processing period higher than the predetermined value; or, when a greater value of real-time service parameter means higher real-time requirement of the data corresponding to the application, adjusting, by the operating system, a processing period of a local clock for each CPU in the CPU set which is bound with the application with the real-time service parameter greater than or equal to the predetermined value, to make the adjusted processing period higher than the predetermined value.

The method further comprises: after information of any one of the CPUs in the device is updated, sending, by the operating system, the updated information to other CPUs needing to update the information.

The method further comprises: when a less value of real-time service parameter means higher real-time requirement of the data corresponding to the application, executing, by the operating system, a huge page mapping operation on memory occupied by the application with the real-time service parameter less than or equal to a predetermined value; or, when a greater value of real-time service parameter means higher real-time requirement of the data corresponding to the application, executing, by the operating system, a huge page mapping operation on memory occupied by the application with the real-time service parameter greater than or equal to the predetermined value.

After the operating system binds services to the CPU sets according to the real-time requirement of service, the method further comprises: allocating memory for the services by the operating system, wherein when a less value of real-time service parameter means higher real-time requirement of the data corresponding to the application, for the CPU set of the application with the real-time service parameter less than or equal to a predetermined value, establishing, by the operating system, a mapping of a physical address and a virtual address of a memory while allocating the memory for the application, or, when a greater value of real-time service parameter means higher real-time requirement of the data corresponding to the application, for the CPU set of the application with the real-time service parameter greater than or equal to the predetermined value, establishing, by the operating system, a mapping of a physical address and a virtual address of a memory while allocating the memory for the application.

After the operating system binds the service, the method further comprises: aligning all addresses in a memory by the operating system.

The method further comprises: when a less value of real-time service parameter means higher real-time requirement of the data corresponding to the application, binding, by the operating system, a work queue thread of the application with the real-time service parameter less than or equal to a predetermined value to the CPU set corresponding to the application with the real-time service parameter greater than the predetermined value; or, when a greater value of real-time service parameter means higher real-time requirement of the data corresponding to the application, binding, by the operating system, a work queue thread of the application with the real-time service parameter greater than or equal to the predetermined value to the CPU set corresponding to the application with the real-time service parameter less than the predetermined value.

The applications allocated for the CPU sets by the operating system comprise at least one of: media plane application and control plane application.

An apparatus for service management, comprising:
a scheduling module, configured to schedule all CPUs and to group all or parts of the scheduled CPUs to obtain multiple CPU sets;
a service binding module, configured to bind applications to the CPU sets according to real-time requirement of data; and
a control module, configured to control the CPU sets bound with the applications to process their respective bound applications.

A device, comprising a service management apparatus and multiple CPUs, the service management apparatus communicating with the CPUs, wherein the service management apparatus comprises:
a scheduling module, configured to schedule all the CPUs and group all or parts of the scheduled CPUs to obtain multiple CPU sets;
a service binding module, configured to bind applications to the CPU sets according to real-time requirement of data; and
a control module, configured to control the CPU sets bound with the applications to process their respective bound applications.

With the technical solution of the present invention, the application binding (allocation) for multiple CPU sets based on the real-time requirement of data is implemented by a single operating system to implement the multi-core heterogeneous running mode for the single operating system, thereby effectively reducing the processing complexity (such as, the complexity of system startup, system booting, version management, system debugging and the like), avoiding the communication and location between the operating systems, and reducing the complexity of application development.

### Brief Description of the Drawings

Fig. 1 is a flowchart of a method for service management according to one embodiment of the present invention;
Fig. 2 is a diagram showing an overall architecture according to one embodiment of the present invention;
Fig. 3 is a diagram showing a task binding according to one embodiment of the present invention;
Fig. 4 is a diagram showing a huge page mapping according to one embodiment of the present invention;
Fig. 5 is a structure diagram of an apparatus for service management according to one embodiment of the present invention; and
Fig. 6 is a structure diagram of a device according to one embodiment of the present invention.

### Detailed Description of the Embodiments

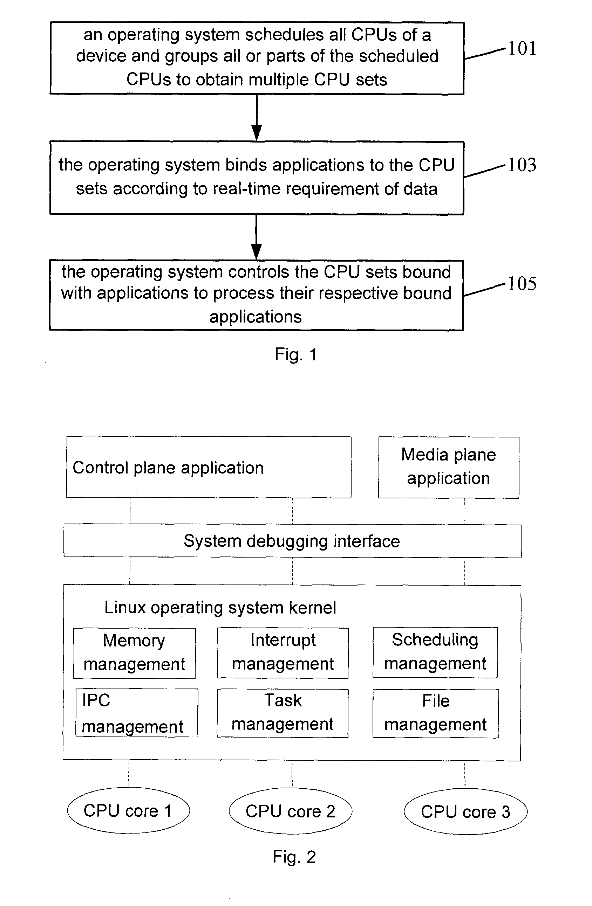

Fig. 1 shows a flowchart of a method for service management of one embodiment of the present invention, and as shown in this figure, the method includes the following steps.

Step 101, an operating system schedules all CPUs of a device and groups all or parts of the scheduled CPUs to obtain multiple CPU sets.

Step 103, the operating system binds applications to the multiple CPU sets according to real-time requirement of data, wherein the real-time service parameters of the applications bound to the same CPU set are within the preset range.

Step 105, the operating system controls the CPU sets bound with the applications to process their respective bound applications. For example, data stream can be divided into control stream data (corresponding to control plane application) and media stream data (corresponding to media plane application). For the control stream data, after a network driver receives the control stream data, the operating system forwards the control stream data to a CPU in the CPU set bound with control plane applications, and the CPU analyzes and parses the control stream data and then executes a specific control command. For the media stream data, after a network card driver receives the media stream data, the operating system forwards the media stream data to a CPU in the CPU set bound with media plane applications, and the CPU parses and processes the media stream data and then executes a specific control command.

Through the processing above, the application binding for multiple CPU sets basing on the real-time requirement of data is implemented by a single operating system to implement the multi-core heterogeneous running mode for the single operating system. Moreover, with only one operating system, problems can be positioned by a unified debugging tool, and the version management and system booting object is also only one operating system, thereby reducing the complexity of management and booting. Furthermore, programming interfaces of the single operating system are unified so as to only use the programming primitive of a host operating system, thereby being favorable for the development and maintenance of applications.

The real-time service parameter as the delay of the service is described below as an example.

It is assumed that a real-time service parameter may be represented by integers 1 to 5 and there are 5 applications whose real-time service parameters are respectively 1 to 5. During the binding, if CPU set 1 corresponds to real-time service parameters 1 to 3, CPU set 2 corresponds to real-time service parameter 4, and CPU set 3 corresponds to real-time service parameter 5, it is required to bind applications 1 to 3 to CPU set 1, application 4 to CPU set 2, and application 5 to CPU set 3.

The real-time service parameter may be the delay of the service. Generally, the less the delay of the service is, the higher the real-time requirement of the data corresponding to the application is, and the greater the delay of the service is, the lower the real-time requirement of the data corresponding to the application is.

To be described clearly, the embodiment of the present invention is described below with the media plane application and control plane application as examples, wherein the data corresponding to the media plane application is high in real-time requirement, while the data corresponding to the control plane application is low in real-time requirement, but they are not limited thereto, and the allocation of other applications and that of various applications divided in other ways still fall within the scope of protection of the present invention.

It is assumed that a device is provided with 4 CPUs: CPU1, CPU2, CPU3 and CPU4, CPU1 can be taken as a CPU set, and CPU 2 and CPU 3 can be taken as another CPU set, and then, the media plane application can be bound to CPU 1, and the control plane application can be bound to CPU 2 and CPU 3. In the specific implementation process, after different applications are bound to the CPU set, the operating system can further execute one of the following operations (Operation 1 to Operation 7).

### Operation 1

The operation system forbids processing a soft interrupt of the CPU set bound with the application with the real-time service parameter less than or equal to a predetermined value, i.e., the operating system binds the soft interrupt of the application with the real-time service parameter less than or equal to the predetermined value to the CPU set corresponding to the application with the real-time service parameter greater than the predetermined value. For example, the operating system may preferably forbid processing the soft interrupt of the CPU set bound with the application with the highest (or higher) real-time requirement, for example, the operating system forbids processing the soft interrupt of CPU 1 (such as forbids processing net-rx, net-tx, timer soft interrupt and tasklet soft interrupt in CPU1), or the operating system also may reduce the time of processing the soft interrupt in the CPU 1.

### Operation 2

The operating system adjusts a processing period of a local clock for each CPU in the CPU set which is bound with the application with the real-time service parameter less than or equal to a predetermined value, to make the adjusted processing period higher than the predetermined value. For example, the operating system adjusts the processing period of the local clock for each CPU in the CPU set which is bound with the application with the highest (or higher) real-time requirement, to make the adjusted processing period higher than the predetermined value. Due to the periodical generation of interrupt of the local clock, the clock interrupt processing function will consume an instruction cycle of the CPU, thereby causing increase of the load of the CPU. In order to reduce the influence of the clock interrupt, the local clock interrupt can be optimized and the operating system can increase the processing period of the local clock.

### Operation 3

After information of any one of the CPUs in the device is updated, the operating system sends the updated information to other CPUs needing to update the information. In order to reduce the influence of irrelevant inter-core interrupts, in a multi-core (i.e., multiple CPUs, a core is regarded as a CPU in the text, and the current CPU with multiple cores is also regarded as a CPU) environment, different cores will communicate with one another mainly in an inter-core interrupt way. For example, for such operations as cache refreshment, task creation and switch, and memory mapping under a multi-core condition, it needs to synchronously reflect the modification of the memory to other cores, specifically by notifying other cores to refresh cache by the inter-core interrupt, during which a large amount of inter-core interrupts will be sent. The media plane core (CPU bound with the media plane application, such as CPU 1) will consume CPU instruction cycle when responding to the inter-core interrupts, causing increase of the load of the CPU. Therefore, the operating system needs to distinguish necessary cache refreshment from unnecessary ones. The necessary cache refreshment needs the inter-core interrupt, and the cache should be sent to the core needing to refresh the cache but not sent for the unnecessary refreshment operation, thereby reducing the influence of the Inter-Processor Interrupt (IPI) on the performance of the media plane core.

### Operation 4

The operating system executes a huge page mapping operation on memory occupied by the application with the real-time service parameter less than or equal to the predetermined value. For example, the operating system executes a huge page mapping operation on memory occupied by the application with the highest (or higher) real-time requirement so as to forbid missing of Translation Look-aside Buffer (TLB) entry.

### Operation 5

The operating system allocates memory for the applications after binding the applications to the CPU sets according to the real-time requirement of data, wherein for the application with the real-time service parameter less than or equal to the predetermined value, the operating system establishes a mapping of a physical address and a virtual address for the memory while allocating the memory for the application. For example, the operating system needs to allocate memory for the application after binding services to the CPU sets according to the real-time requirement of data, wherein for the application with the highest (or higher) real-time requirement, the operating system establishes a mapping of a physical address and a virtual address of memory while allocating the memory for the application in order to forbid page fault exception.

### Operation 6

After binding the application, the operating system performs alignment operation for all addresses in the memory.

### Operation 7

The operating system binds a work queue thread of the application with the real-time service parameter less than or equal to a predetermined value to the CPU set corresponding to the application with the real-time service parameter greater than a predetermined value. For example, the operating system binds a work queue thread of the application with the highest (higher) real-time requirement to the CPU set corresponding to the application with the lowest real-time requirement. Generally, each core corresponds to a work queue thread, and the work queue provides a mechanism to allow one of the cores to synchronously wait for the completed execution (called flush work) of the work queues of other cores. For example, on the premise of the divided control plane application and media plane application, the work queue thread of the media plane application needs to be bound to the control plane core when not scheduled immediately due to priority and other reasons.

In the above, the objectives of operations 4 to 6 are to reduce the influence of kernel exception. The media plane application runs in a user mode. In order to reduce the times of trapping into kernel as well as the extra instruction cycle consumption caused to the processor (register push, restoration, exception processing) in the running process, it should be considered to reduce the exception times. For example, TLB miss exception, page fault exception and misalignment exception can be avoided by operations 4 to 6.

Furthermore, in the operations 1, 2, 4, 5, and 7, a predetermined value of real-time service parameter may also be set before the operations, and the operations 1, 2, 4, 5, and 7 are only executed for the CPU set bound with the application with the real-time service parameter less than or equal to the predetermined value. In addition, the predetermined values of real-time service parameter in the operations 1, 2, 4, 5, and 7 may be the same or different.

The disclosure of the present invention provides a multi-core heterogeneous running method. Different applications are bound to different CPU sets according to the real-time requirement of data so as to ensure that the application with high real-time requirement can fully use the CPU resources, optimize the resource utilization of the CPU, and reduce the influence of the application with low real-time requirement on the application with high real-time requirement. For example, the control plane data and media plane data can be allocated to different CPU sets so as to facilitate the media plane application to fully use the CPU resources, effectively avoid the problem that the running process of the media plane application is interrupted by irrelevant events, and reduce the influence of the execution of control plane application on the media plane application.

The embodiment of the present invention is described below in conjunction with a specific application scenario in detail.

Fig. 2 is a diagram showing the overall architecture according to one embodiment of the present invention. The multi-core heterogeneous running method essentially utilizes basic function of the operating system. Based on this, in order to reduce the mutual influence between cores, a specific influence point is optimized so as to meet the performance requirement of the multi-core heterogeneous running. As shown in Fig. 2, the operating system binds a physical core, specifically binding the control plane application to core 1 and core 2, and the media plane application to core 3, wherein it is assumed that such two applications are run in a user mode process space as an ordinary task of the operating system. They communicate with a kernel through system scheduling interfaces to obtain the services of the kernel. The kernel mainly includes a memory management sub-module, an interrupt management sub-module, a scheduling management sub-module, an inter-process communication (IPC) management sub-module, a task management sub-module, a file management sub-module, and etc. These sub-modules are modified to achieve the aim of reducing the mutual influence between the media plane application and control plane application, with the implementation process specifically described below.

### 1. Binding of application

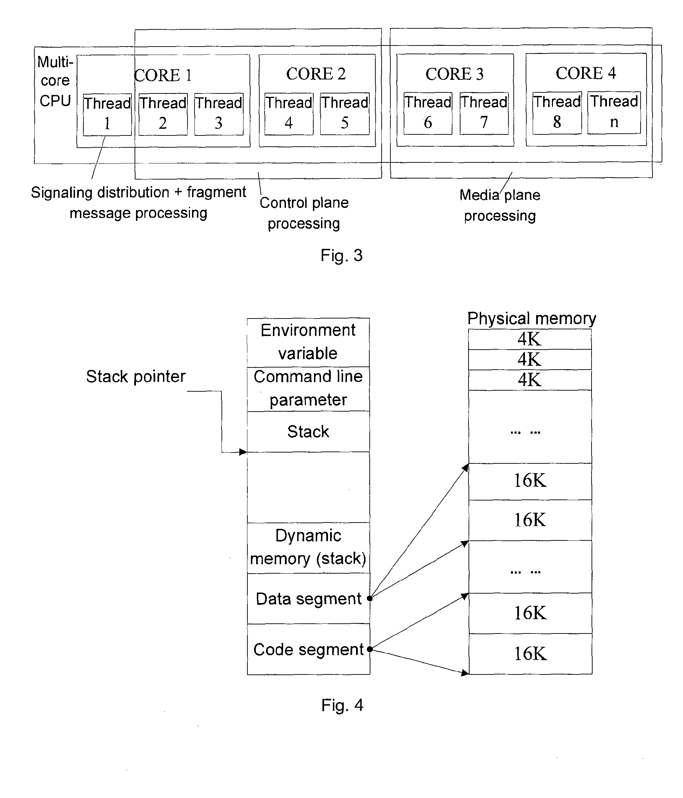

Tasks are divided into control plane application and media plane application according to the type of the processing of the application, i.e., the real-time requirement of data, and are respectively bound to different cores through a CPU affinity setting interface provided by the operating system, with the specific binding way shown in Fig. 3. As shown in Fig. 3, the device includes 4 CPUs (i.e., 4 cores): CORE 1, CORE 2, CORE 3, and CORE 4, wherein CORE 1 has threads 1 to 3, CORE 2 has threads 4 and 5, CORE 3 has threads 6 and 7, and CORE 4 has threads 8 and n. When binding the applications, the processing of control plane application (i.e., control plane processing) may be bound to the CPU set of CORE 1 and CORE 2, and the processing of media plane application (i.e, media plane processing) may be bound to CORE 3 and CORE 4.

### 2. Binding of work queue kernel thread

The work queue kernel threads (threads 6, 7, 8 and n) corresponding to the media plane core (i.e., CORE 3 and CORE 4 above) are bound to the control plane core (i.e., CORE 1 and/or CORE 2 above). The work queue threads are named as events, and the queue are work queue threads created by the system. Each CPU corresponds to a work thread and the work thread is bound to the CPU by default. A callback function structure work_struce is articulated to the work queue link corresponding to the current CPU by calling schedule_work, and the work thread corresponding to the current CPU is waken up. Under a normal condition, the work queue threads process the functions articulated on their respective queues without affecting one another. However, in case of synchronization between the work queues, such as calling the flush_workqueue function, it will not start until all the tasks articulated to all the work queues are executed completely. If the flush_workqueue is initiated by a task on the control plane application, but the work queue of the media plane application has articulated work, the control plane application will be blocked at the flush_workqueue till the work queue of the media plane application is completely processed. However, if the threads of the media plane application have a higher priority than that of the control plane application, they cannot be executed and the control plane core will be in a deadlock state. To avoid this, the work queues of the media plane core need to be bound. The work queues of the media plane core are bound to the control plane core through the CPU binding interface of the operating system so as to avoid the deadlock. Since the application bound to the control plane core is not high in the real-time requirement, the running of the work queues on the control plane core will not be taken over by the task with a high priority all the time. Thus it may be guaranteed that no deadlock will occur during flush_workqueue.

### 3. Binding of interrupt

The operating system provides interfaces to bind interrupt to one or more cores. Many device drivers (such as network card driver) using interrupt usually complete package reception in an interrupt processing function, then schedule work related to a soft interrupt task processing protocol stack. In the operating system, each core corresponds to a soft interrupt processing thread; in order to prevent interrupt from occurring in the core (CPU or CPU set) corresponding to the application high in real-time requirement, for example, in order to prevent the media core from processing irrelevant interrupt and soft interrupt, it is required to set interrupt affinity and bind the interrupt not to be processed by the media core to the control core, thereby preventing the media plane application from being interrupted by irrelevant events when the media core runs the media plane application.

### 4. Optimization of clock interrupt

In an operating system, a key core (the first booted core) has a global clock, and other cores respectively have a local clock. In order to reduce the instruction cycle consumed by the media plane core in clock interrupt processing, the generation frequency of local clock interrupt on the media plane core can be reduced. Reducing the frequency of local clock interrupt needs to modify related codes of kernel clock interrupt according to different architectures. For example, in order to reduce the frequency of local clock interrupt, it is required to set a hardware register for a timer in initialization process of the timer so as to control the hardware to generate regular interrupt frequency and increase interrupt generation interval (the specific set value is related to the hardware).

In case of no high-resolution timer, the local clock may be adjusted to reset the clock interrupt generation frequency, for example, the clock frequency can be directly reduced. For the device with the high-resolution timer, the timer may be adjusted (such as, programmed) each time the clock interrupt occurs, the interval for triggering the clock interrupt next time is set according to the current time, and the local clock is slowed by increasing the interval.

### 5. Real-time mapping of memory

In general, default memory allocation uses a demand paging policy, i.e., instead of establishing mapping of the physical pages immediately, the allocated virtual memory will trigger the page fault exception when accessing the physical pages and finish the allocation and mapping of such pages during the exception processing. Because a mode switching from a user mode to a core mode will result in overhead, it is required to modify the memory management part of the kernel to reduce the demand paging process above during the running process of the media plane application, thereby supporting the real-time mapping of the memory. The user mode program allocates the memory mainly by the mmap or brk system calling, and establishes the mapping to the physical pages immediately during the memory allocation.

### 6. Memory mapping through a huge page way by application to reduce TLB Miss (that is, the missing of TLB entry) exception

When loading an application, the operating system will parse the Executable and Linkable Format (ELF) file and allocate a virtual address space for a code segment and a data segment. When the program is executed, the page fault exception will be triggered during the access of content of the code segment or data segment, and the allocation and reading of physical pages will be finished in the page fault exception processing function. By default, the operating system will page the physical memory in the size of 4K. The page size of 4K is a trade-off, because managing those pages will consume more memory if the page is smaller, correspondingly, as the number of TLB entries is determined by hardware, the physical memory mapped by TLB will be reduced after the page gets smaller, resulting in more TLB Miss exceptions and affecting the performance. On the other hand, if the page is too large, it is also needed to allocate a whole page when small memory is necessary due to the unit of memory allocation by page, thus resulting in great waste. For the media plane application, to optimize the system performance, it is required to reduce the TLB Miss exception. Specifically, the following operations can be executed: loading the application, calling the elf_map mapping code segment and data segment by the kernel; calculating the size of the code segment or data segment and determining the proper page size, wherein the principle of determining the page size is: if the code segment and data segment are included in one page but not many pages; calculating the memory size to be allocated according to the page size (align according to a huge page size, as shown in Fig. 4, the page of 16K can be used as the huge page); allocating a physical page for the code segment or data segment (here, the allocated physical page can still use the default physical page of 4K); triggering the page fault exception during the access of the content of the code segment or data segment for the first time; and writing the entries of the corresponding page in TLB.

### 7. Reduce nonalignment exception

In the operating system, the exception processing will result in the switching from a user mode to a kernel mode. To reduce the times of entering the kernel exception of the media plane application, the application needs to be optimized. Preferably, aligning variables in the application and controlling by the macro in the complier can be performed.

### 8. Optimization of inter-core interrupt

The inter-core interrupt is mainly used for communication between different cores in a multi-core system, for example, a lot of inter-core interrupt will be used in a synchronization of cache. Specifically, the following operations may be executed: modifying a page table entry by one of the cores, refreshing the cache of the local CPU; judging whether the memory of the current task is referred by other tasks, if not, only refreshing the cache of the current CPU and marking the cache of the current task on other CPUs invalid, otherwise, sending the inter-core interrupt to notify other CPUs to refresh the cache. However, the inter-core interrupt does not need to be sent in all cases and it is required to further judge whether the cache of the task has been marked invalid on other cores, if so, the inter-core interrupt does not need to be sent. During a task switch, a scheduler will automatically allocate a new cache context for itself.

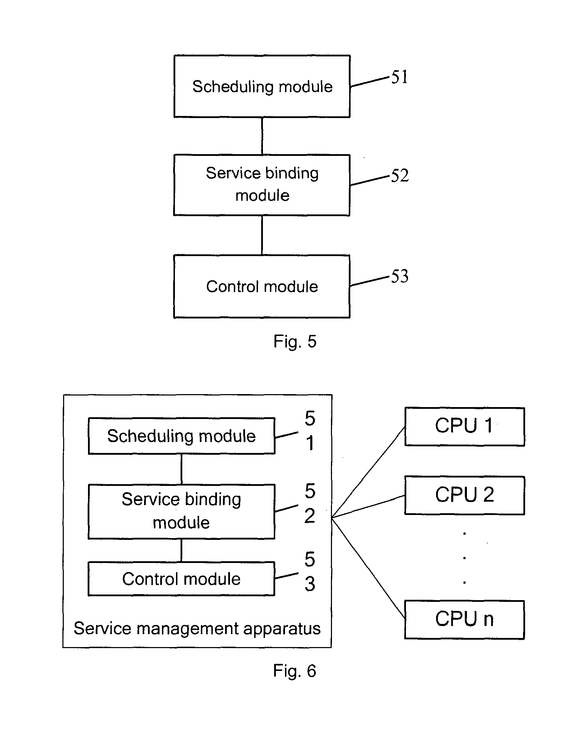

Fig. 5 is a structure diagram of an apparatus for service management according to one embodiment of the present invention. As shown in Fig. 5, the apparatus includes:
a scheduling module 51, configured to schedule all CPUs and group all or parts of the scheduled CPUs to obtain multiple CPU sets;
a service binding module 52, connected to the scheduling module 51 and configured to bind applications to the CPU sets according to the real-time requirement of data, wherein the real-time service parameters of the applications bound to the same CPU set are within a preset range; and
a control module 53, connected to the service binding module 52 and configured to control the CPU sets bound with the applications to process their respective bound applications.

Fig. 6 is a structure diagram of a device according to one embodiment of the present invention. As shown in Fig. 6, the device includes a service management apparatus and multiple CPUs, wherein the service management apparatus communicating with the CPUs. In the above, the service management apparatus includes: a scheduling module 51, which is configured to schedule all the CPUs and group all or parts of the scheduled CPUs to obtain multiple CPU sets; a service binding module 52, which is connected to the scheduling module 51 and configured to bind applications to the CPU sets according to the real-time requirement of data, wherein the real-time service parameters of the applications bound to the same CPU set are within a preset range; and a control module 53, which is connected to the service binding module 52 and configured to control the CPU sets bound with the applications to process their respective bound applications.

To sum up, with the technical solution of the present invention, the application binding for multiple CPU sets is implemented based on the real-time requirement of data by a single operating system to implement the multi-core heterogeneous running mode for the single operating system. Moreover, with only one operating system, problems can be positioned by a unified debugging tool, and the version management and system booting object is also only one operating system, thereby reducing the complexity of management and booting. Furthermore, programming interfaces of the single operating system are unified to only use the programming primitive of a host operating system, thereby being favorable for the development and maintenance of an application and avoiding the complex communication and positioning between the operating systems.

Fig. 5 and Fig. 6 are respectively the apparatus and device corresponding to the method above. With the working process and working principle having been described in the method part in detail, no further description is repeated herein, and the corresponding description of the method can be referred to.

It need to be noted that for other real-time service parameters, if the representation way of the real-time service parameters for the real-time requirement is: the greater the real-time service parameter is, the higher the real-time requirement of the data corresponding to the application is (correspondingly, if the less the real-time service parameter is, the lower the real-time requirement of the service is), the following operations need to be executed: the operating system binds the soft interrupt of the application with the real-time service parameter greater than or equal to the predetermined value to the CPU set corresponding to the application with the real-time service parameter less than the predetermined value; the operating system adjusts the processing period of the local clock for each CPU in the CPU set, which is bound with the application with the real-time service parameter greater than or equal to the predetermined value, to make the adjusted processing period higher than the predetermined value; the operating system executes the huge page mapping operation on the memory occupied by the application with the real-time service parameter greater than or equal to the predetermined value; the operating system allocates memory for the application after binding applications to the CPU sets according to the real-time requirement of data, wherein for the CPU set bound with the application with the real-time service parameter greater than or equal to the predetermined value, the operating system establishes the mapping of the physical address and virtual address for the memory while allocating the memory for the application; and the operating system binds the work queue thread of the application with the real-time service parameter greater than or equal to the predetermined value to the CPU set corresponding to the application with the real-time service parameter less than the predetermined value.

What described above are only preferred embodiments of the present invention, and not intended to limit the present invention; any modifications, equivalent replacements, improvements and the like within the spirit and principle of the present invention shall fall within the scope of protection of the present invention.

## Claims

1. A method for service management, **characterized by**, comprising:
scheduling all Central Processing Units (CPUs) of a device and grouping all or part of the scheduled CPUs to obtain multiple CPU sets by an operation system;
binding applications to the CPU sets according to real-time requirement of data by the operation system; and
controlling the CPU sets bound with the applications to process their respective bound applications by the operation system.

2. The method for service management according to claim 1, **characterized in that**, the operation of binding services to the CPU sets according to the real-time requirement of service comprises: real-time service parameters of the applications bound to the same CPU set are within a preset range.

3. The method for service management according to claim 2, **characterized in that**, the method further comprises:
when a less value of real-time service parameter means higher real-time requirement of the data corresponding to the application, binding a soft interrupt of the application with the real-time service parameter less than or equal to a predetermined value to the CPU set corresponding to the application with the real-time service parameter greater than the predetermined value by the operating system; or,
when a greater value of real-time service parameter means higher real-time requirement of the data corresponding to the application, binding a soft interrupt of the application with the real-time service parameter greater than or equal to the predetermined value to the CPU set corresponding to the application with the real-time service parameter less than the predetermined value by the operating system.

4. The method for service management according to claim 2, **characterized in that**, the method further comprises:
when a less value of real-time service parameter means higher real-time requirement of the data corresponding to the application, adjusting, by the operating system, a processing period of a local clock for each CPU in the CPU set which is bound with the application with the real-time service parameter less than or equal to a predetermined value, to make the adjusted processing period higher than the predetermined value; or,
when a greater value of real-time service parameter means higher real-time requirement of the data corresponding to the application, adjusting, by the operating system, a processing period of a local clock for each CPU in the CPU set which is bound with the application with the real-time service parameter greater than or equal to the predetermined value, to make the adjusted processing period higher than the predetermined value.

5. The method for service management according to claim 2, **characterized in that**, the method further comprises:
after information of any one of the CPUs in the device is updated, sending, by the operating system, the updated information to other CPUs needing to update the information.

6. The method for service management according to claim 2, **characterized in that**, the method further comprises:
when a less value of real-time service parameter means higher real-time requirement of the data corresponding to the application, executing, by the operating system, a huge page mapping operation on memory occupied by the application with the real-time service parameter less than or equal to a predetermined value; or,
when a greater value of real-time service parameter means higher real-time requirement of the data corresponding to the application, executing, by the operating system, a huge page mapping operation on memory occupied by the application with the real-time service parameter greater than or equal to the predetermined value.

7. The method for service management according to claim 2, **characterized in that**, after the operating system binds services to the CPU sets according to the real-time requirement of service, the method further comprises:
allocating memory for the services by the operating system, wherein
when a less value of real-time service parameter means higher real-time requirement of the data corresponding to the application, for the CPU set of the application with the real-time service parameter less than or equal to a predetermined value, establishing, by the operating system, a mapping of a physical address and a virtual address of a memory while allocating the memory for the application, or,
when a greater value of real-time service parameter means higher real-time requirement of the data corresponding to the application, for the CPU set of the application with the real-time service parameter greater than or equal to the predetermined value, establishing, by the operating system, a mapping of a physical address and a virtual address of a memory while allocating the memory for the application.

8. The method for service management according to claim 2, **characterized in that**, after the operating system binds the service, the method further comprises:
aligning all addresses in a memory by the operating system.

9. The method for service management according to claim 2, **characterized in that**, the method further comprises:
when a less value of real-time service parameter means higher real-time requirement of the data corresponding to the application, binding, by the operating system, a work queue thread of the application with the real-time service parameter less than or equal to a predetermined value to the CPU set corresponding to the application with the real-time service parameter greater than the predetermined value; or,
when a greater value of real-time service parameter means higher real-time requirement of the data corresponding to the application, binding, by the operating system, a work queue thread of the application with the real-time service parameter greater than or equal to the predetermined value to the CPU set corresponding to the application with the real-time service parameter less than the predetermined value.

10. The method for service management according to any one of claims 1 to 9, **characterized in that**, the applications allocated for the CPU sets by the operating system comprise at least one of: media plane application and control plane application.

11. An apparatus for service management, **characterized by**, comprising:
a scheduling module, configured to schedule all CPUs and to group all or parts of the scheduled CPUs to obtain multiple CPU sets;
a service binding module, configured to bind applications to the CPU sets according to real-time requirement of data; and
a control module, configured to control the CPU sets bound with the applications to process their respective bound applications.

12. A device, **characterized by**, comprising a service management apparatus and multiple CPUs, the service management apparatus communicating with the CPUs, wherein
the service management apparatus comprises:
a scheduling module, configured to schedule all the CPUs and group all or parts of the scheduled CPUs to obtain multiple CPU sets;
a service binding module, configured to bind applications to the CPU sets according to real-time requirement of data; and
a control module, configured to control the CPU sets bound with the applications to process their respective bound applications.
